# EUROPÄISCHE PATENTSCHRIFT

(11) **EP 0 890 714 B1**
(45) Veröffentlichungstag und Bekanntmachung des Hinweises auf die Patenterteilung: **25.02.2004**
(21) Anmeldenummer: 98112221.1
(22) Anmeldetag: 02.07.1998
(51) Int. Cl.: F01N 3/08, F01N 3/02

(54) **Kraftfahrzeug mit einer Verbrennungskraftmaschine und Katalysator**
Motor vehicle with an internal combustion engine and catalytic converter
Véhicule automobile avec moteur à combustion interne et pot catalytique

(30) Priorität: 09.07.1997 DE 19729284
(43) Veröffentlichungstag der Anmeldung: 13.01.1999
(73) Patentinhaber: Ford Global Technologies, Inc., A subsidiary of Ford Motor Company, Dearborn, Michigan 48126 (US)
(72) Erfinder: Mayer, Thomas, E., 50129 BM-Glessen (DE); Phlips, Patrick, 50858 Koeln (DE); Grieser, Klemens, 40764 Langenfeld (DE); Krzykowski, Heinrich, Z., 58313 Herdecke (DE)
(74) Vertreter: Drömer, Hans-Carsten, Dipl.-Ing.

(56) Entgegenhaltungen:
- EP-A- 0 848 142
- DE-A- 3 439 998
- DE-A- 4 218 834

## Beschreibung

Die Erfindung betrifft ein Kraftfahrzeug mit einer im Frontbereich angeordneten Verbrennungskraftmaschine mit in Reihe angeordneten Zylindern, bei denen die Abgase über einen Katalysator geführt werden, wobei die Abgasleitungen der einzelnen Zylinder auf einer Seite der Verbrennungskraftmaschine in einer Sammelleitung zusammengefaßt sind, von der zwei Zuleitungen mit unterschiedlichem Querschnitt zur Abgasleitung führen und die Zuleitung mit dem größeren Querschnitt durch ein Ventil absperrbar ist und wobei die Zuleitungen für die Abgase zur Abgasleitung unterschiedliche Längen aufweisen und die Zuleitung mit dem größeren Querschnitt, unterhalb der Verbrennungskraftmaschine in Fahrtrichtung des Kraftfahrzeuges vor und unter der Verbrennungskraftmaschine angeordnet, einen bogenförmigen Bereich aufweist und von dort die Abgasleitung entgegen der Fahrtrichtung zu der unterhalb des Passagierraumes angeordneten Abgasleitung verläuft und die Zuleitung mit dem geringeren Querschnitt eine kurze Verbindung zwischen einem Bereich der Sammelleitung nahe einem Entkoppelungselement und der Abgasleitung herstellt.

Eine Anordnung dieser Art geht aus der DE-OS 42 18 834 hervor. Hier ist bei einem in einem Kraftfahrzeug quer angeordneten Reihenmotor die Anordnung so getroffen, daß zwei Leitungen mit gleicher Länge, aber unterschiedlichem Querschnitt, von der Verbrennungskraftmaschine unmittelbar zum im hinteren Bereich des Kraftfahrzeuges angeordneten Katalysator geführt werden. In der Leitung mit dem größeren Querschnitt ist ein Absperrventil vorgesehen, wodurch in der Aufwärmphase die Leitung mit dem größeren Querschnitt abgesperrt und die Abgase lediglich durch die Leitung mit dünnerem Querschnitt dem Katalysator zugeführt werden. Dieses hat den Nachteil, daß die Führung der Leitungen infolge der in der Regel beengten Platzverhältnisse schwierig ist und die notwendige Länge der Abgasleitung mit geringerem Querschnitt zuviel Wärmeverluste mit sich bringt.

Zwar ist in der DE-OS 34 39 998 vorgesehen, bei zwei unterschiedlichen Zuleitungen der Abgase zum Katalysator die Zuleitungen in der Länge unterschiedlich auszubilden. Die Anordnung und Führung dieser Leitungen innerhalb des Kraftfahrzeuges ist jedoch schwierig und führt in der gezeigten Anordnung nicht zu den gewünschten Ergebnissen.

In der Patentanmeldung EP 848 142 A (stand der Technik nach Artikel 54 (3) EPÜ), sowie der älteren Patentschrift DE-196 51 239 ist bereits vorgeschlagen worden, eine Anordnung so zu gestalten, daß die Zuleitungen für die Abgase zum Katalysator unterschiedliche Längen aufweisen, wobei die Zuleitung mit dem größeren Querschnitt, unterhalb der Verbrennungskraftmaschine in Fahrtrichtung des Kraftfahrzeuges vor und unter der Verbrennungskraftmaschine angeordnet, einen bogenförmigen Bereich aufweist und von dort die Abgasleitung entgegen der Fahrtrichtung zu dem unterhalb des Passagierraumes angeordneten Katalysator verläuft, wobei die Zuleitung mit dem geringeren Querschnitt eine kurze Verbindung zwischen einem Bereich der Sammelleitung nahe einem Entkopplungselement und einem dem Katalysator benachbarten Bereich der Abgasleitung herstellt.

Bei dieser Anordnung kann eine Einrichtung zur Reduktion der NOx-Bestandteile der Abgase stromabwärts zum Drei-Wege-Katalysator angeordnet sein.

Diese Anordnung weist jedoch den Nachteil auf, daß durch die exotherme Reaktion des Drei-Wege-Katalysators eine große Wärmebelastung für die Einrichtung zur Reduktion der NOx-Bestandteile, die NOx-Falle, auftritt. Diese Einrichtung ist nämlich gegen hohe Temperaturen empfindlich.

Entsprechend ist es die Aufgabe der Erfindung, eine Lösung für die vorstehend beschriebene Anordnung vorzuschlagen, bei der die Anordnung von Drei-Wege-Katalysator und NOx-Falle so erfolgt, daß eine starke Wärmebeeinflussung der NOx-Falle durch die exotherme Wärmeentwicklung durch den Drei-Wege-Katalysator nicht erfolgt.

Dieses Ziel wird dadurch erreicht, daß die Auspuffkrümmer der Verbrennungskraftmaschine unmittelbar in den Drei-Wege-Katalysator einmündend angeordnet sind und die NOx-Falle in Strömungsrichtung der Abgase zwischen der Abgasleitung und der Auspuffleitung positioniert ist.

Durch diese Anordnung wird erreicht, daß die durch die exotherme Reaktion des Drei-Wege-Katalysators erfolgende Aufheizung der Abgase durch die Führung der Gase innerhalb der bogenförmigen Bereiche der Abgasableitung gemildert wird, so daß eine starke Wärmebeanspruchung der NOx-Falle vermieden wird.

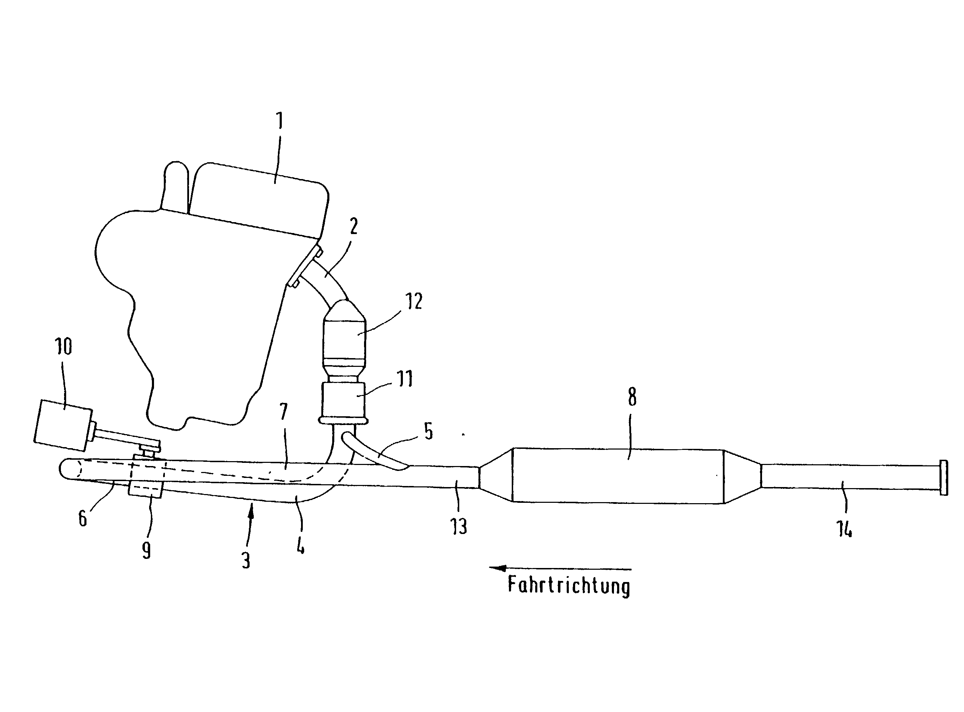

Ein Ausführungsbeispiel der Erfindung ist in der Figur dargestellt.

Die Figur zeigt eine Seitenansicht der erfindungsgemäßen Anordnung innerhalb des vorderen Bereiches eines Kraftfahrzeuges.

Eine Verbrennungskraftmaschine 1 weist in Reihe angeordnete Zylinder auf; die Anordnung der Zylinderreihe erfolgt beim Ausführungsbeispiel quer zur Fahrtrichtung. Die Abgase der Verbrennungskraftmaschine werden über Abgaskrümmer 2 unmittelbar einem Drei-Wege-Katalysator 12 zugeleitet. Von dort werden die Abgase über ein Entkoppelungselement 11 und eine Abgasleitung, die insgesamt mit 3 bezeichnet ist, einer NOx-Falle 8 zugeführt.

Kurz nach dem Entkoppelungselement 11 ist eine Möglichkeit vorgesehen, die Abgase sowohl einer Zuleitung 4 mit größerem Durchmesser zuzuführen, als auch einer Zuleitung 5 mit kleinerem Durchmesser, die auf kurzem Wege die Abgase einem Bereich 13 der Abgasleitung zuführt. Der Bereich 13 liegt bevorzugt in der Abgasleitung 7 kurz vor ihrer Einmündung in die NOx-Falle 8. Die Zuleitung 4 mit größerem Querschnitt verläuft dann in Fahrtrichtung zu einem bogenförmigen Bereich 6, der unterhalb der Verbrennungskraftmaschine 1 und in Fahrtrichtung gesehen vor der Verbrennungskraftmaschine 1 angeordnet ist. Die Weiterführung der Abgase erfolgt dann durch eine Abgasleitung 7, die entgegen der Fahrtrichtung verläuft und die Abgase der NOx-Falle dem Katalysator 8 zuführt. Eine Auspuffleitung ist mit 14 bezeichnet.

Vor dem bogenförmigen Bereich 6 der Abgasleitung 3 ist ein Absperrventil 9 vorgesehen, das zwischen der Zuleitung 4 und dem bogenförmigen Bereich 6 liegt. Das Absperrventil 9 wird durch eine Stellvorrichtung 10 betätigt. Die Anordnung des Absperrventils kann insbesondere dann, wenn die Kühlverhältnisse dort besser sind, auch nach dem bogenförmigen Bereich 6 erfolgen.

Beim Starten der Verbrennungskraftmaschine 1 sorgt die Stellvorrichtung 10 für das Absperrventil 9 zunächst dafür, daß die Zuleitung 4 geschlossen ist. Dadurch gelangen die Abgase über die Zuleitung 5 auf kurzem Wege zur NOx-Falle 8. Abhängig von der Temperatur in der NOx-Falle 8 wird sodann über die Stellvorrichtung 10 das Absperrventil 9 geöffnet, wodurch dann der Weg der Abgase über die Zuleitung 4, den bogenförmigen Bereich 6 und die Abgasleitung 7 frei wird. Da die Zuleitung 4 einen größeren Querschnitt aufweist als die Zuleitung 5, gelangt so der weitaus größere Teil der Abgase über die Zuleitung 4 und den bogenförmigen Bereich 6 zur NOx-Falle 8.

Die Anordnung des Drei-Wege-Katalysators 12 in die Leitung unmittelbar nach den Auspuffkrümmern 2 hat eine rasche Aufheizung zur Folge, was wünschenswert ist. Trotzdem wird bei Dauerbetrieb durch die Anordnung bei offenem Ventil 9 eine gute Kühlung der Abgase erreicht, bevor diese die NOx-Falle 8 erreichen. Im Startbetrieb, also bei geschlossenem Ventil 9, erfolgt die Ableitung der Abgase über die Zuleitung 5; in diesem Arbeitsbereich ist jedoch wegen der Kürze dieses Betriebszustandes und auch im Hinblick der Notwendigkeit, daß sich die Verbrennungskraftmaschine 1 sowie der Drei-Wege-Katalysator erst aufheizen müssen, die Temperatur der der NOx-Falle zugeleiteten Gase akzeptabel im Hinblick auf eine Wärmebelastung der NOx-Falle.

Durch diese Anordnung wird eine unerwünscht hohe Aufheizung der NOx-Falle durch die exotherme Reaktion des Drei-Wege-Katalysators verhindert, da die Abgase nach dem Drei-Wege-Katalysator noch der unter der Verbrennungskraftmaschine angeordneten Kühlschlange zugeleitet werden.

## Patentansprüche

1. Kraftfahrzeug mit einer im Frontbereich angeordneten Verbrennungskraftmaschine (1) mit in Reihe angeordneten Zylindern, bei denen die Abgase über einen Katalysator geführt werden, wobei die als Abgaskrümmer (2) ausgebildete Abgasleitungen der einzelnen Zylinder auf einer Seite der Verbrennungskraftmaschine (1) in einer Sammelleitung zusammengefaßt sind, von der zwei Zuleitungen (4, 5) mit unterschiedlichem Querschnitt zu einer Abgasleitung (13) führen, wobei die Zuleitung (4) mit dem größeren Querschnitt durch ein Ventil (9) absperrbar ist, wobei die Zuleitungen (4, 5) für die Abgase zur Abgasleitung (13) unterschiedliche Längen aufweisen, wobei die zuleitung (4) mit dem größeren Querschnitt, unterhalb der Verbrennungskraftmaschine in Fahrtrichtung des Kraftfahrzeuges vor und unter der Verbrennungskraftmaschine (1) angeordnet, einen bogenförmigen Bereich aufweist und von dort die Abgasleitung entgegen der Fahrtrichtung zu der unterhalb des Passagierraumes angeordneten Abgasleitung (13) verläuft, wobei die zuleitung (5) mit dem geringen Querschnitt eine kurze Verbindung zwischen einem Bereich der Sammelleitung nahe einem Entkoppelungselement (11) und der Abgasleitung (13) herstellt, und wobei die Abgaskrümmer (2) der Verbrennungskraftmaschine (1) unmittelbar in einen Drei-Wege-Katalysator (12) einmündend angeordnet sind und eine NOx-Falle (8) in Strömungsrichtung der Abgase zwischen der Abgasleitung (13) und einer Auspuffleitung (14) positioniert ist.

## Claims

1. Motor vehicle with an internal combustion engine (1) arranged in the front region and having cylinders arranged in series, in which the exhaust gases are led via a catalytic converter, the exhaust-gas lines, designed as exhaust-gas manifolds (2), of the individual cylinders being combined, on one side of the internal combustion engine (1), in a collective line, from which two feed lines (4, 5) of different cross section lead to an exhaust-gas line (13), the feed line (4) with the larger cross section being capable of being shut off by means of a valve (9), the feed lines (4, 5) for the exhaust gases to the exhaust-gas line having different lengths, the feed line (4) with the larger cross section being arranged below the internal combustion engine (1) in front of and beneath the said internal combustion engine in the direction of travel of the motor vehicle and having an arcuate region, and the exhaust-gas line running from there, opposite to the direction of travel, to the exhaust-gas line (13) arranged below the passenger space, the feed line (5) with the small cross section making a short connection between a region of the collective line, near to an uncoupling element (11), and the exhaust-gas line (13), and the exhaust-gas manifolds (2) of the internal combustion engine (1) being arranged so as to issue directly into a three-way catalytic converter (12), and an NOx trap (8) being positioned between the exhaust-gas line (13) and an exhaust pipe (14) in the direction of flow of the exhaust gases.

## Revendications

1. Véhicule automobile avec un moteur à combustion interne (1) disposé dans la zone avant et comprenant des cylindres disposés en ligne, dont les gaz d'échappement sont acheminés au travers d'un catalyseur, les conduites de gaz d'échappement réalisées sous la forme d'un collecteur de gaz d'échappement (2) de chacun des cylindres étant regroupées d'un côté du moteur à combustion interne (1) en une conduite commune de laquelle deux conduites d'arrivée (4, 5) de sections différentes mènent vers une conduite de gaz d'échappement (13), la conduite d'arrivée (4) ayant la section la plus grande pouvant être fermée par un clapet (9), les conduites d'arrivée (4, 5) des gaz d'échappement présentant des longueurs différentes vers la conduite de gaz d'échappement (13), la conduite d'arrivée (4) ayant la section la plus grande étant disposée sous le moteur à combustion interne dans le sens de déplacement du véhicule automobile à l'avant et sous le moteur à combustion interne (1), présentant une zone coudée et de là la conduite de gaz d'échappement s'étendant en sens inverse du sens de déplacement vers la conduite de gaz d'échappement (13) qui se trouve sous l'habitacle, la conduite d'arrivée (5) ayant la section la plus petite établissant une liaison courte entre une zone de la conduite commune à proximité d'un élément de découplage (11) et la conduite de gaz d'échappement (13), et les collecteurs de gaz d'échappement (2) du moteur à combustion interne (1) étant disposés de manière à déboucher directement dans un catalyseur à trois voies (12) et un piège à NOx (8) étant disposé dans le sens d'écoulement des gaz d'échappement entre la conduite de gaz d'échappement (13) et une conduite d'échappement (14).
